# FASCICULE DE BREVET EUROPEEN

(11) **EP 4 099 614 B1**
(45) Date de publication et mention de la délivrance du brevet: **11.11.2026**
(21) Numéro de dépôt: 22175778.4
(22) Date de dépôt: 27.05.2022
(51) Int. Cl.: H04L 9/30, H04L 9/32

(54) **PROCÉDÉS D'ENROLEMENT DE DONNÉES POUR VÉRIFIER L'AUTHENTICITÉ D'UNE DONNÉE DE SÉCURITÉ OU DE VERIFICATION DE L'AUTHENTICITÉ D'UNE DONNÉE DE SECURITÉ**
VERFAHREN ZUM EINROLLEN VON DATEN, UM DIE ECHTHEIT EINES SICHERHEITSRELEVANTEN DATUMS ZU ÜBERPRÜFEN ODER DIE ECHTHEIT EINES SICHERHEITSRELEVANTEN DATUMS ZU VERIFIZIEREN
METHODS OF DATA ENROLMENT TO VERIFY THE AUTHENTICITY OF SECURITY DATA OR VERIFICATION OF THE AUTHENTICITY OF SECURITY DATA

(30) Priorité: 02.06.2021 FR 2105799
(43) Date de publication de la demande: 07.12.2022
(73) Titulaire: IDEMIA Public Security France, 92400 Courbevoie (FR)
(72) Inventeur: CHABANNE, Hervé, 92400 Courveboie (FR); GUIGA, Linda, 92400 Courveboie (FR); BAHLOUL, Sébastien, 92400 Courveboie (FR)
(74) Mandataire: IPS

(56) Documents cités:
- FR-A1- 3 047 688
- STEVEN D GALBRAITH ET AL: "Obfuscated Fuzzy Hamming Distance and Conjunctions from Subset Product Problems", vol. 20190603:073202, 3 June 2019 (2019-06-03), pages 1 - 30, XP061032808, Retrieved from the Internet <URL:http://eprint.iacr.org/2019/620.pdf> [retrieved on 20190601]
- ZOBERNIG LUKAS ET AL: "When are Opaque Predicates Useful?", 2019 18TH IEEE INTERNATIONAL CONFERENCE ON TRUST, SECURITY AND PRIVACY IN COMPUTING AND COMMUNICATIONS/13TH IEEE INTERNATIONAL CONFERENCE ON BIG DATA SCIENCE AND ENGINEERING (TRUSTCOM/BIGDATASE), IEEE, 5 August 2019 (2019-08-05), pages 168 - 175, XP033653708, DOI: 10.1109/TRUSTCOM/BIGDATASE.2019.00031

## Description

### DOMAINE DE L'INVENTION

L'invention concerne des procédés d'enrôlement de données pour vérifier l'authenticité d'une donnée de sécurité et de vérification de l'authenticité d'une donnée de sécurité.

### ETAT DE LA TECHNIQUE

La détention d'un document d'identité (carte d'identité, passeport, permis de conduire, carte de sécurité sociale, etc.) en cours de validité justifie de l'identité d'un individu.

Les documents d'identité consistent en un support généralement en papier ou en plastique sur lequel sont imprimées une photo ainsi que des informations alphanumériques personnelles (nom, prénom, date de naissance, etc.) de son détenteur. On trouve également une bande appelée MRZ (Machine-Readable Zone, Zone de lecture optique), qui contient un code (généralement deux lignes de 36 caractères) résumant les informations alphanumériques du document. Alternativement à la MRZ, on peut trouver un code-barre de type PDF-417 contenant les mêmes informations.

Généralement, les documents d'identité présentent un grand nombre d'éléments de sécurité de haut niveau tels des filigranes ou des hologrammes pour prévenir la falsification. La durée de vie d'un tel document est généralement limitée (10 ou 15 ans), car l'apparence de son possesseur change progressivement, et les éléments de sécurité évoluent.

Lors d'un contrôle d'un individu par une entité, par exemple à l'entrée d'un bâtiment, on lui demande de présenter son document d'identité pour authentification. Il est souhaitable que cette procédure soit la plus rapide possible, tout en étant la plus sécurisée. En effet, le risque est par exemple que des individus recherchés **présentent** un document d'identité falsifié dans lequel des informations ont été modifiée, par exemple la photographie.

On connaît des demandes FR3047688 puis FR1759292 des procédés d'enrôlement de données destinées à être utilisées pour contrôler automatiquement l'identité d'un individu, et des procédés associés de contrôle d'identité, basées sur un mécanisme très astucieux de génération à partir d'un élément visuel d'un document d'identité (en particulier la photo) d'une donnée de sécurité appelée « Digital Photo Seal ». Cette donnée de sécurité constitue une sorte de signature de l'élément visuel : des images acquises d'un même élément visuel, quelles que soient les conditions d'acquisition (i.e. y compris suite à scan ou photocopie), conduisent à l'obtention de données de sécurité sensiblement identiques. Au contraire, la moindre modification de l'élément visuel entraîne une forte variation de cet élément de sécurité.

Ainsi, il suffit de stocker sur une base de données d'un serveur la donnée de sécurité de référence « attendue » pour un document donné, et de la comparer avec celle « candidate » générée à partir d'une copie de ce document, pour savoir si l'élément visuel de ce document est intègre ou non.

En particulier, pour garantir la sécurité de la donnée de référence sur le serveur, celle-ci est « masquée » par application d'une procédure d'encodage (typiquement une procédure d'esquisse de type secure sketch) à la donnée de référence et à une donnée d'aléa, et la donnée de référence masquée est stockée dans la base de données avec une empreinte cryptographique, i.e. un haché, d'une concaténation de la MRZ avec ledit aléa.

On peut alors authentifier un document d'identité présenté par un individu sur la base de sa MRZ (ou toute autre donnée alphanumérique) et de la photographie : une donnée de sécurité candidate est obtenue à partir de la photographie du document présenté, et il est alors possible par application d'une procédure de décodage de retrouver la donnée d'aléa si la photographie du document présenté est identique à celle sur la base de laquelle la donnée de sécurité de référence a été générée, et de vérifier que le haché d'une concaténation de la MRZ (ou la donnée alphanumérique) avec ledit aléa correspond à celui stocké.

Cette solution apporte satisfaction, mais on constate des rares cas de « fausse acceptance » dans lequel la procédure de décodage de Secure Sketch permet de retrouver la donnée d'aléa malgré une donnée de sécurité candidate qui ne coïncide pas à la donnée de sécurité de référence (la photographie présentée est différente de celle du document), ce qui pourrait être exploiter par un attaquant pour s'authentifier frauduleusement.

Et, même sans fausse acceptance, en cas d'attaque par force brute, l'attaquant va pouvoir apprendre du secure sketch, via le nombre d'erreurs corrigées par le code correcteur et ainsi converger vers la solution.

Il serait ainsi souhaitable de disposer d'une nouvelle solution simple, fiable, et totalement sécurisée, d'encodage/décodage d'une donnée de sécurité en vue de pouvoir vérifier automatiquement l'authenticité d'une donnée personnelle cible.

### PRESENTATION DE L'INVENTION

Selon un premier aspect, l'invention concerne un procédé d'enrôlement de données pour vérifier l'authenticité d'une donnée de sécurité, le procédé étant caractérisé en ce qu'il comprend la mise en œuvre par des moyens de traitement de données d'un serveur d'étapes de :
(A) Obtention d'une donnée de sécurité de référence ;
(B) Génération d'une première donnée encodée par application à la donnée de sécurité de référence d'une procédure d'encodage de type obfuscation floue à distance de Hamming ;
(C) Détermination à partir de la donnée de sécurité de référence d'une pluralité de données dérivées de la donnée de sécurité de référence ;
(D) Génération d'une première donnée d'aléa, et détermination d'une deuxième donnée encodée telle qu'un prédicat de type comparaison à point variable paramétré par la deuxième donnée encodée et la première donnée d'aléa est vrai lorsque ledit point variable a pour coordonnées lesdites données dérivées ;
(E) Stockage sur des moyens de stockage de données du serveur d'au moins lesdites première et deuxième données encodées.

Selon des caractéristiques avantageuses et non-limitatives :
L'étape (D) comprend en outre la génération d'une deuxième donnée d'aléa et d'une troisième donnée d'aléa ; l'étape (E) comprenant le stockage sur les moyens de stockage de données du serveur de :
- **Une empreinte** cryptographique d'une concaténation des deuxième et troisième données d'aléa ;
- Une somme des première et deuxième données d'aléa ;
- La troisième donnée d'aléa.

La donnée de sécurité de référence présente n coordonnées binaires notées wᵢ, la procédure d'encodage de type obfuscation à distance de Hamming comprenant le tirage de n+1 nombres premiers notés p1, p2 ...pn, et q, et le calcul d'un produit Πpᵢ^{wi} mod q.

Lesdits paramètres du prédicat définissent une droite et le prédicat de type comparaison à point variable est vrai si et seulement si ledit point variable se trouve sur cette droite.

Ledit prédicat de type comparaison à point variable est exprimé par la formule $\left〈\left〈{\sum }_{i = 0}^{k - 1} {a}_{i} {W}_{i}+b==Wk\right〉\right〉$*,* où a=(a₁...aₖ₋₁) est la deuxième donnée encodée, b la première donnée d'aléa, et W1, W2...Wk ladite pluralité de données dérivées.

Ladite pluralité de données dérivées est constituée d'une première et d'une deuxième données dérivées.

Ledit prédicat de type comparaison à point variable est exprimé par la formule « aW1+b==W2 », où a est la deuxième donnée encodée, b la première donnée d'aléa, et W1 et W2 respectivement les première et deuxième données dérivées.

La donnée de sécurité de référence est une information représentative d'une apparence attendue d'un donnée personnelle cible.

Soit la donnée personnelle cible est un élément visuel et ladite donnée de sécurité est de type Digital Photo Seal ; soit la donnée personnelle cible est un trait biométrique et ladite donnée de sécurité est un modèle biométrique.

La donnée personnelle cible provient d'un document d'identité d'un individu.

Selon un deuxième aspect, l'invention propose un procédé de vérification de l'authenticité d'une donnée de sécurité, caractérisé en ce qu'il comprend la mise en œuvre par des moyens de traitement de données d'un serveur d'étapes de ;
(a) Obtention d'une donnée de sécurité candidate ;
(b) Calcul d'une première donnée décodée par application d'une procédure de décodage de type obfuscation floue à distance de Hamming à la donnée de sécurité candidate et à une première donnée encodée stockée sur des moyens de stockage de données du serveur ;
(c) Détermination à partir de la première donnée décodée d'une pluralité de données dérivées de la première donnée décodée ;
(d) Calcul d'une deuxième donnée décodée, correspondant à une première donnée d'aléa, telle qu'un prédicat de type comparaison à point variable paramétré par une deuxième donnée encodée stockée sur les moyens de stockage de données du serveur et la deuxième donnée décodée est vrai lorsque ledit point variable a pour coordonnées lesdites données dérivées ;
(e) Vérification de la deuxième donnée décodée.

Selon des caractéristiques avantageuses et non-limitatives :
l'étape (e) comprend en outre la vérification qu'une empreinte cryptographique d'une concaténation d'une deuxième donnée d'aléa calculée et d'une troisième donnée d'aléa stockée sur les moyens de stockage de données du serveur coïncide avec une empreinte cryptographique attendue stockée sur les moyens de stockage de données du serveur, la deuxième donnée d'aléa étant calculée à partir de la deuxième donnée décodée et d'une somme des première et deuxième données d'aléa stockée sur les moyens de stockage de données du serveur.

La donnée de sécurité candidate est une information représentative d'une apparence visible d'un donnée personnelle cible dans une image, l'étape (a) comprenant l'extraction de ladite donnée candidate à partir de l'image.

L'étape (a) comprend l'acquisition préalable de ladite image par des moyens d'acquisition optique d'un équipement client et la transmission au serveur.

Selon un troisième aspect, l'invention propose un serveur d'enrôlement de données pour vérifier l'authenticité d'une donnée de sécurité, caractérisé en ce qu'il comprend des moyens de stockage de données et des moyens de traitement de données configurés pour :
- Obtenir une donnée de sécurité de référence ;
- Générer une première donnée encodée par application à la donnée de sécurité de référence d'une procédure d'encodage de type obfuscation floue à distance de Hamming ;
- Déterminer à partir de la donnée de sécurité de référence une pluralité de données dérivées de la donnée de sécurité de référence ;
- Générer une première donnée d'aléa, et déterminer une deuxième donnée encodée telle qu'un prédicat de type comparaison à point variable paramétré par la deuxième donnée encodée et la première donnée d'aléa est vrai lorsque ledit point variable a pour coordonnées lesdites données dérivées ;
- Stocker sur les moyens de stockage de données au moins lesdites première et deuxième données encodées.

Selon un quatrième aspect, l'invention propose un serveur de vérification d'authenticité d'une donnée de sécurité, caractérisé en ce qu'il comprend des moyens de stockage de données et des moyens de traitement de données configurés pour :
- Obtenir une donnée de sécurité candidate ;
- Calculer une première donnée décodée par application d'une procédure de décodage de type obfuscation floue à distance de Hamming à la donnée de sécurité candidate et à une première donnée encodée stockée sur les moyens de stockage de données ;
- Déterminer à partir de la première donnée décodée une pluralité de données dérivées de la première donnée décodée ;
- Calculer une deuxième donnée décodée, correspondant à une première donnée d'aléa, telle qu'un prédicat de type comparaison à point variable paramétré par une deuxième donnée encodée stockée sur les moyens de stockage de données et la deuxième donnée décodée est vrai lorsque ledit point variable a pour coordonnées lesdites données dérivées ;
- Vérifier la deuxième donnée décodée.

Selon un cinquième et un sixième aspects, l'invention propose un produit programme d'ordinateur comprenant des instructions de code pour l'exécution d'un procédé selon le premier ou le deuxième aspect d'enrôlement de données pour vérifier l'authenticité d'une donnée de sécurité ou de vérification de l'authenticité d'une donnée de sécurité ; et un moyen de stockage lisible par un équipement informatique sur lequel un produit programme d'ordinateur comprend des instructions de code pour l'exécution d'un procédé selon le premier ou le deuxième aspect d'enrôlement de données pour vérifier l'authenticité d'une donnée de sécurité ou de vérification de l'authenticité d'une donnée de sécurité.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- La figure 1 représente schématiquement un système pour la mise en œuvre des procédés selon l'invention :
- La figure 2a représente les étapes d'un mode de réalisation d'un procédé d'enrôlement selon l'invention ;
- La figure 2b représente les étapes d'un mode de réalisation d'un procédé de vérification selon l'invention.

### DESCRIPTION DETAILLEE

### Architecture

La présente invention concerne d'une part un procédé d'enrôlement de données pour vérifier l'authenticité d'une donnée de sécurité, et d'autre part un procédé de vérification de l'authenticité d'une donnée de sécurité. Ces procédés s'inscrivent avantageusement dans le contexte de vérification de l'authenticité d'une donnée personnelle cible représentée par la donnée de sécurité (telle qu'une donnée biométrique, mais également tout élément visuel tel qu'une photographie) préférentiellement issue d'un document d'identité 1, en particulier en vue de contrôler l'identité d'un individu ou authentifier un document d'identité 1, mais on ne sera pas limité à ce mode de réalisation particulier.

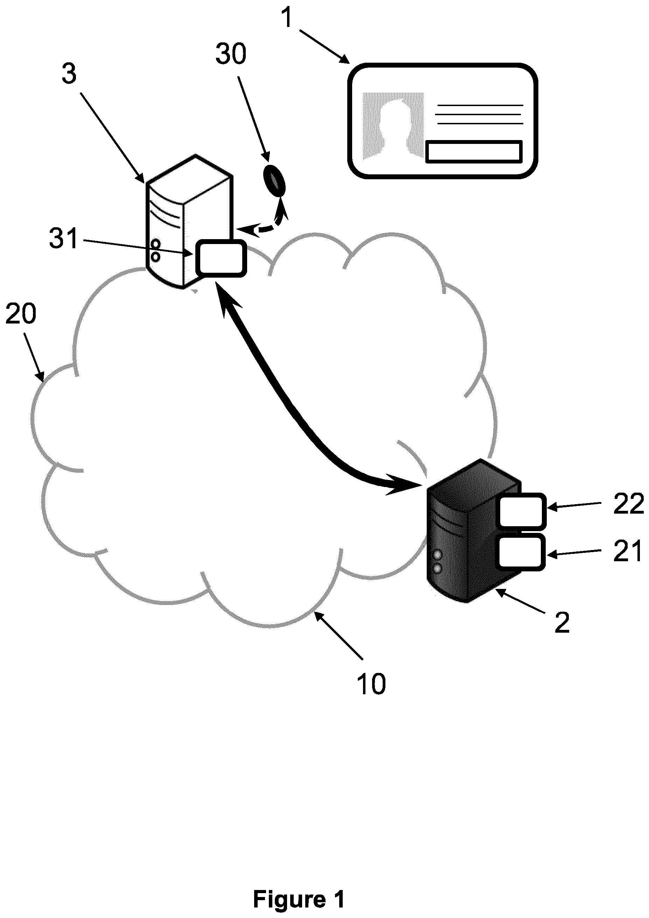

En référence à la figure 1, on a représenté schématiquement une architecture de système pour la mise en œuvre des présents procédés. Ce système comprend au moins un serveur 2. Le système peut également comprendre un équipement client 3 connecté au serveur 2 via un réseau 20 tel qu'Internet.

La donnée de sécurité est comme expliqué toute donnée dérivée d'une donnée personnelle cible qu'elle protège : on ne peut pas retrouver la donnée personnelle cible depuis la donnée de sécurité, mais cette donnée de sécurité caractérise la donnée personnelle cible.

Comme l'on verra, ladite donnée personnelle cible est typiquement associée de manière unique à un individu (i.e. c'est une donnée d'identité), en particulier une photographie dudit individu, préférentiellement celle visible sur le document d'identité 1 de l'individu, mais également une empreinte digitale, une signature manuscrite, voire l'aspect visuel complet du document d'identité 1 de l'individu, etc. On comprend que toutes ces données personnelles cibles n'ont jamais une apparence unique (deux photos d'un même individu ne seront jamais exactement identiques), d'où la nécessité d'extraire des données de sécurité dérivées et d'une procédure « floue » pour pouvoir comparer deux données.

Le serveur 2 est un équipement distant, sécurisé, typiquement d'une autorité ou d'un fournisseur de solution de sécurité. Il comprend des moyens de traitement de données 21 (de type processeur) et des moyens de stockage de données 22 (une mémoire, par exemple un disque dur).

L'équipement client 3 est un terminal local comprenant avantageusement des moyens d'acquisition optique 30 (typiquement un appareil photo ou un scanner), et adapté pour obtenir et le cas échéant transmettre au serveur 2 une image à partir de laquelle on peut extraire la donnée de sécurité (i.e. représentant la donnée personnelle cible, par exemple une photographie du document d'identité sur laquelle est visible la photographie de l'individu, voire doctement une image de l'individu - notamment d'un trait biométrique de l'individu). L'équipement client 3 et le serveur 2 comprennent avantageusement des interfaces de communications leur permettant de dialoguer à distance. A noter que le client 3 peut lui-même être un terminal mobile de l'individu (en particulier de type smartphone).

On note que l'équipement 3 reste optionnel, on peut directement fournir au serveur des données de sécurité à traiter. A noter en outre que l'équipement client 3 peut comprendre ses propres moyens de traitement de données 31 et mettre en œuvre certains traitements, voir plus loin.

On note qu'il est tout à fait possible que d'autres entités soient connectées au serveur 2 et à l'équipement 3, en particulier des serveurs mettent en œuvre des services consommant les assertions produites par l'équipement 3, i.e. de services souhaitant l'authentification d'un individu ou de son document d'identité 1, par exemple un serveur d'une banque, d'un hôtel, etc.

### Donnée de sécurité

De manière connue les présents procédés utilisent préférentiellement comme donnée de sécurité une information représentative d'une apparence de la donnée personnelle cible, c'est-à-dire une donnée descriptive d'au moins un fragment de la donnée personnelle cible telle qu'elle apparait, i.e. une « signature », qui va permettre des comparaisons.

On désigne comme donnée de sécurité « de référence » l'information représentative de l'apparence « théorique » de la donnée personnelle cible, i.e. tel qu'attendue. Par contraste, on désigne comme donnée de sécurité « candidate » l'information représentative de l'apparence constatée de la donnée personnelle cible, i.e. à vérifier (sur la base de laquelle un individu souhaite par exemple s'authentifier). On comprend comme expliqué que cette apparence constatée n'est généralement pas parfaitement identique à l'apparence attendue, du fait des conditions des défauts inhérents à l'acquisition d'une image, et à la variabilité des conditions de prise de vue (éclairage, bougé, distance, etc.).

Néanmoins, ladite information représentative de l'apparence est choisie de telle sorte que si deux données personnelles cibles ont des apparences qui coïncident (i.e. il s'agit du même individu/même document 1 même si les conditions de prise de vue ne sont pas identiques), alors leurs données de sécurité coïncident (i.e. présentent une distance selon une métrique donnée inférieure à un seuil) également.

Ainsi, la donnée de sécurité de référence et la donnée de sécurité candidate coïncident si et seulement si l'apparence constatée et l'apparence attendue de la donnée personnelle cible coïncident.

Si la donnée personnelle cible est une donnée biométrique, la donnée de sécurité peut être tout modèle (template) biométrique, i.e. ensemble de caractéristiques définissant un trait biométrique, par exemple la position de minuties pour une empreinte digitale.

Si la donnée personnelle cible est un élément visuel (typiquement une photographie de tout ou partie d'un document d'identité 1), on peut utiliser comme donnée de sécurité le « Digital Photo Seal » (DPS), tel que décrite dans les demandes citées dans l'introduction ou plus précisément la demande EP3206192, basée sur la position de points singuliers d'un élément graphique, ou toute autre « signature » d'une donnée personnelle candidate.

Le DPS d'une photographie est une caractéristique de cette image qui n'est pas un modèle biométrique (à noter que le DPS peut être utilisé comme donnée de sécurité y compris si la donnée personnelle cible est une image représentant un trait biométrique - par exemple la photographie du visage d'un individu telle que visible sur son document d'identité - mais on comprend alors que la donnée personnelle est traitée en tant qu'image et non entant que donnée biométrique), et peut par exemple comprendre un histogramme de gradient orienté (on parle alors d'algorithme à descripteur HOG).

On peut dans tous les cas alternativement utiliser un algorithme d'extraction de caractéristiques (la donnée de sécurité est alors une carte de caractéristiques) appliqué à la donnée personnelle candidate, du type employant un réseau de neurones convolutionnel, également connu sous l'acronyme CNN (pour l'anglais Convolutional Neural Network).

### Procédé d'enrôlement

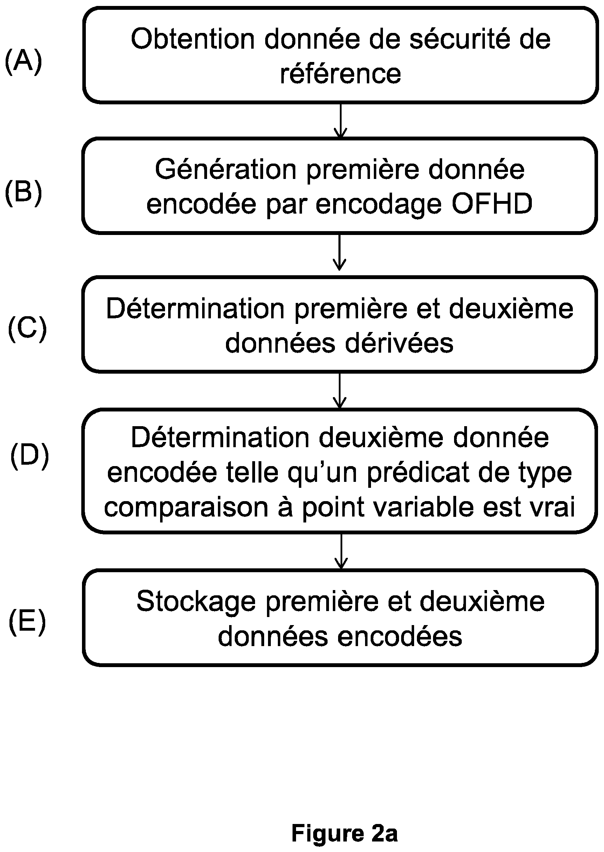

En référence à la figure 2a, selon un premier aspect est proposé un procédé mis en œuvre par les moyens de traitement de données 21 du serveur 2 d'enrôlement de données pour vérifier l'authenticité d'une donnée de sécurité.

Le procédé commence par une étape (A) d'obtention d'une donnée de sécurité de référence, en particulier représentative d'une apparence attendue d'une donnée personnelle cible. On note W la donnée de sécurité de référence, et on notera W' une donnée de sécurité candidate.

Comme expliqué, l'homme du métier pourra utiliser n'importe quel type de donnée de sécurité produite de n'importe quelle façon connue, le serveur 2 pourra simplement la recevoir de l'extérieur, par exemple depuis une autorité.

Alternativement, l'étape (A) peut comprendre l'extraction de la donnée de sécurité de référence de la donnée personnelle cible, cette dernière pouvant être fournie par une autorité (par exemple la photographie « officielle » de l'individu du document d'identité 1), ou bien par l'individu, par exemple en prenant lui-même une photographie de son visage ou son document d'identité via le terminal 3.

Ensuite, dans une étape (B), une première donnée encodée est générée par application à la donnée de sécurité de référence d'une procédure d'encodage originale de type obfuscation floue à distance de Hamming, en anglais « Fuzzy Hamming Distance Obfuscator » ou simplement OFHD, voir le document Steven D. Galbraith, Lukas Zobernig: Obfuscated Fuzzy Hamming Distance and Conjunctions from Subset Product Problems. TCC 2019*,* plutôt que par secure sketch. On note o(W) la donnée de sécurité encodée, i.e. la première donnée encodée.

On suppose que W présente n coordonnées binaires wᵢ, 1≤i≤n (i.e. W est une donnée sur n bits), par exemple n=512 pour un DPS sur un document d'identité 1.

L'OFHD est basée sur le problème du « produit de sous-ensembles modulaire » (modular subset product problème), qui dit que étant donnés un entier r<n/2, n nombres premiers distincts pᵢ, 1≤i≤n, un nombre premier q tel que le produit d'un sous-ensemble de r des pᵢ est inférieur à q (Π_{i∈l} pᵢ < q pour tout l sous-ensemble de {1, 2, ...n} de taille r) et l'entier égal au produit d'un sous-ensemble choisi des pᵢ modulo q (égal à Πpᵢ^{xi} mod q avec xᵢ=1 si pᵢ est choisi et 0 sinon), retrouver le sous-ensemble des pi choisis est statistiquement impossible dès lors que q est suffisamment grand. On peut donc obfusquer le vecteur des xᵢ, en particulier le vecteur W (i.e. on prend xᵢ = wᵢ).

La première donnée de sécurité peut alors être exprimée comme le vecteur de dimension n+2 comprenant les pi, q et Πpᵢ^{wi} mod q, i.e. o(W) = (p₁, p₂ ... pₙ, q, Πpᵢ^{wi}).

Par contre, à partir d'une autre donnée W', il est possible de décoder o et de retrouver W lorsque W et W' sont suffisamment proches au sens de la distance de Hamming en utilisant en utilisant les techniques dites des fractions continues et, par exemple, l'algorithme d'Euclide.

On note *Decode(o,W')* l'algorithme qui à partir d'un donnée de sécurité candidate W' et de o(W) cherche à retrouver W.

Par exemple, en considérant comme données de sécurité des vecteurs avec n=512 coordonnées, avec une distance de Hamming maximale de 91 pour l'acceptance. Cela donne une taille pour q de 1138 bits. Avec ces paramètres, la probabilité de trouver un élément au hasard suffisamment proche de W est inférieure à 2⁻¹⁷². Sur un PC standard, Decode est exécuté en environ 200 ms.

L'intérêt d'OFHD par rapport à secure sketch est qu'en cas d'erreur un attaquant ne gagne pas d'information supplémentaire sur W. En effet, *Decode(o,W')* renvoie soit W si W' est suffisamment proche de W, soit ne renvoie rien, soit une autre valeur W" sinon, dans tous les cas l'attaquant ne peut pas déterminer si il est proche de W, et il ne peut pas converger. En revanche, contrairement à secure sketch, OFHD n'offre pas de « payload » (en français « charge utile ») dans lequel il peut stocker une valeur d'aléa. En effet, la procédure d'encodage d'OFHD ne prend en entrée que la donnée de sécurité.

A ce titre, les présents procédés proposent astucieusement de coupler OFHD à une autre technique, dite à prédicat de type comparaison à point variable, pour générer une deuxième donnée encodée cette fois porteuse d'un payload pour un aléa.

Tout d'abord, le procédé comprend une étape (C) de détermination, à partir de la donnée de sécurité de référence d'une pluralité de données dérivées de la donnée de sécurité de référence, dont au moins une première et d'une deuxième données dérivées (on notera leur nombre k avec k≥2, préférentiellement k=2 ou 3), telles que chacune des données dérivées ne permet, seule, de remonter à la donnée de sécurité de référence. Il est tout à fait possible qu'il ne soit pas possible de remonter à la donnée de sécurité même en connaissant toutes les données dérivées. Naturellement les diverses données dérivées doivent être différentes, i.e. obtenues par plusieurs dérivations différentes.

Comme expliqué on peut simplement avoir exactement deux données dérivées, i.e. ladite pluralité de données dérivées est constituée d'une première et une deuxième données dérivées, et on note W1 et W2 les première et deuxième données dérivées. Il peut tout à fait y avoir plus que deux données dérivées, une troisième donnée dérivée, etc. (de manière générale on notera W1, W2,...Wk ladite pluralité de données dérivées).

On pourra voir les k données dérivées comme autant de « coordonnées » obtenues à partir de la donnée de sécurité.

On peut utiliser n'importe quelles fonctions de dérivation. Selon un premier mode de réalisation, on divise simplement la donnée de sécurité en k parties, i.e. W1 et W2 sont les deux parties de W dans le mode où k=2, cette division pouvant elle-même être faite selon plusieurs façon différentes (sélection d'un bit sur k, des n/k premiers/suivants/derniers bits, etc.).

Selon un deuxième mode de réalisation, les données dérivées sont k empreintes cryptographiques obtenues par k fonctions de hachage différentes (cela incluant k paramétrages différents d'une même fonction de hachage). On peut hacher tout ou partie de la donnée de sécurité, et par exemple hacher de la même manière chacune des parties obtenues par division conformément au premier mode.

Alors, dans une étape (D), une première donnée d'aléa est générée (comme l'on verra une deuxième voire une troisième donnée d'aléa peuvent être également générées), et on détermine alors une deuxième donnée encodée telle qu'un prédicat de type comparaison à point variable paramétré par la deuxième donnée encodée et la première donnée d'aléa est vrai lorsque ledit point variable a pour coordonnées lesdites données dérivées (la première donnée dérivée est une première coordonnée, la deuxième donnée dérivée est une deuxième coordonnée, etc.). La donnée d'aléa est comme son nom l'indique une donnée de valeur aléatoire apportant de l'aléa, qui a une importance car sa connaissance va permettre de prouver que l'on dispose bien de la donnée de sécurité de référence.

L'obfuscation à prédicat de type comparaison à point variable, en anglais « variable point comparison predicate » est proposée dans le document Lukas Zobernig, Steven D. Galbraith, Giovanni Russello: When are Opaque Predicates Useful? TrustCom/BigDataSE 2019*.*

L'idée est de construire un prédicat (i.e. un objet booléen) de la forme P(x₁,x₂,...xₖ)_{a,b} qui est vrai sensiblement uniquement lorsque les x₁ ... xₖ présentent des valeurs attendues. On voit que a et b sont des paramètres du prédicat. Le prédicat compare deux valeurs et peut ainsi être exprimé comme P(x₁,x₂,...,xₖ)_{a,b}= « f(x₁,x₂,...,xₖ)_{a,b}==0 ».

Par rapport à ce qui est décrit dans le document susmentionné, astucieusement on ne cherche pas à obfusquer les données dérivées W1...Wk mais bien la première donnée d'aléa, qu'on note donc respectivement avec la deuxième donnée encodée b et a. En d'autres termes on choisit la deuxième donnée encodée et la première donnée d'aléa comme paramètres a et b et le prédicat est fonction de W1, W2, etc., i.e. on exprime le prédicat comme P(W1,W2,...Wk)_{a,b}. A noter que a peut être un vecteur, i.e. avoir plusieurs composantes (avantageusement k-1 composantes), et s'exprimer sous la forme a= (a₁,a₂,...aₖ₋₁). Par commodité, si a a une seule composante a₁, on confondra les notations a et a₁.

De manière préférée, lesdits paramètres du prédicat (deuxième donnée encodée et première donnée d'aléa) définissent une droite et le prédicat est vrai si et seulement si ledit point variable se trouve sur cette droite, ce qui est ainsi notamment le cas (mais pas exclusivement) lorsque le point variable a pour coordonnées lesdites données dérivées. Dans le cas où on a deux données dérivée c'est une droite dans le plan, dans le cas où l'on a trois données dérivées c'est une droite dans l'espace, etc. Bien entendu on ne sera pas limité au cas d'une droite et par exemple ce pourra être un objet polynomial.

La fonction f(x₁,x₂,...,xₖ)_{a,b} est en d'autres termes préférentiellement choisie comme a₁x₁+a₂x₂...+b-xₖ, i.e. le prédicat est $P {\left({x}_{1},{x}_{2},…,{x}_{k}\right)}_{a , b} = \left〈\left〈{\sum }_{i = 0}^{k - 1} {a}_{i} {x}_{i}+b=={x}_{k}\right〉\right〉$ (équation de ladite droite), et donc la formule liant la deuxième donnée encodée a, la donnée d'aléa b, et les données dérivées W1, W2... Wk est ${\sum }_{i = 0}^{k - 1} {a}_{i} {W}_{i} + b = Wk$*.* Dans le cas d'un objet polynomial, on a par exemple ${\sum }_{i = 0}^{k - 1} {a}_{i} {Wi}^{zi} + b = Wk$ où les zᵢ sont des entiers (positifs et/ou négatifs) non nuls prédéfinis.

Revenant au mode de réalisation d'une droite avec k=2, la fonction f(x₁,x₂)_{a,b} est ainsi préférentiellement choisie comme ax₁+b-x₂, i.e. le prédicat est P(x₁,x₂)_{a,b}= « ax₁+b==x₂ » (équation de ladite droite), et donc la formule liant la deuxième donnée encodée a (qui ici une unique composante), la donnée d'aléa b, et les données dérivées W1 et W2 est aW1+b=W2.

En résumé, l'encodage de l'étape (D) consiste à trouver a(b) tel que a₁W1+a₂W2...+b=Wk, de sorte à « masquer » b, mais on ne sera pas limité par cette équation.

Connaissant b, W1 et W2, on peut facilement calculer a en fonction de ces trois autres données, et en particulier si le prédicat est P(W1,W2)_{a,b}= « aW1+b==W2 » il suffit de poser a = (W2-b)/W1 pour que le prédicat soit vrai pour le point variable de coordonnées (W1, W2). Si k>2, on a une pluralité de a qui conviennent, on peut par exemple tirer au hasard a₂ jusqu'à aₖ₋₁ et poser a₁ = (Wk-b-a₂W2...-aₖ₋₁Wk-1)/W1 pour que le prédicat soit vrai pour le point variable de coordonnées (W1, W2, ... Wk). On pourra naturellement procéder symétriquement avec une autre composante que a₁.

La procédure de décodage associée est simple, car partant de la deuxième donnée encodée a, si l'on dispose des bonnes données dérivées W1 et W2 on peut retrouver b en calculant Wk-a₁W1-a₂W2...-aₖ₋₁Wk-1.

Plus précisément, en supposant que le décodage de o(W) en utilisant la donnée candidate W' renvoie W", l'utilisation du prédicat permet de récupérer le payload de la deuxième donnée encodée a, c'est à dire la première donnée d'aléa b si W"=W, et ce sans révéler d'information sur W.

Pour ce faire, on calcule des données dérivées de W" (notées W1", W2"... Wk") par la même dérivation que pour W1, W2, ... Wk, et on calcule la donnée décodée, c'est-à-dire le payload b" respectant le prédicat, i.e. b" = Wk"-a₁W1"-a₂W2"...-aₖ₋₁Wk-1" dans le cas de l'équation de droite. Si k=2, on a b" = W2"-aW1".

Si W' n'est pas suffisamment proche de W, alors W" n'est pas égal à W et la donnée décodée b" n'est pas la bonne valeur de la donnée d'aléa b.

Le présent procédé termine l'enrôlement par une étape (E) de stockage sur les moyens de stockage de données 22 du serveur 2 d'au moins lesdites première et deuxième données encodées (o et a).

De manière préférée, lorsque l'étape (D) comprend la génération d'une deuxième donnée d'aléa et d'une troisième donnée d'aléa, l'étape (E) comprend en outre le stockage sur les moyens de stockage de données 22 du serveur 2 de :
- Une empreinte cryptographique d'une concaténation des deuxième et troisième données d'aléa ;
- Une somme des première et deuxième données d'aléa ;
- La troisième donnée d'aléa.

On comprend que la deuxième donnée et la troisième donnée peuvent bien entendu être permutées.

En notant r et t les deuxième et troisième données d'aléa, on a donc : h=H(r|t) l'empreinte cryptographique et u = r+b. Au final on stocke donc o, a, h, t et u.

Ces données supplémentaires permettent de tester le b" obtenu à nouveau sans révéler la valeur de b masquée : il suffit de vérifier que H(u-b"|t)=h.

On notera qu'on n'est absolument pas limité à cette solution et qu'on peut juste par exemple vérifier que H(b"|t)=H(b|t), ou tout autre technique connue de l'homme du métier pour vérifier que b"=b en dévoilant b le moins possible.

On comprend qu'aucune des données stockées o, a, h t et u n'est exploitable en soi car :
- La première donnée encodée o ne permet pas de remonter à W, même en testant des W' itérativement ;
- La deuxième donnée encodée a ne permet pas de remonter à b à moins de connaître W avec certitude ;
- h est une simple empreinte cryptographiques et t est une donnée d'aléa n'apportant aucune information ;
- Le résultat de la somme u ne permet pas de remonter à b à moins de connaitre r avec certitude

De manière connue par ailleurs, l'étape (E) peut comprendre le stockage sur les moyens de stockage 22 d'un chiffré d'au moins une autre donnée à protéger telle qu'une donnée alphanumérique personnelle, avec une clé basée sur la première donnée d'aléa (par exemple une empreinte cryptographique d'une concaténation de la première donnée d'aléa et de ladite donnée alphanumérique personnelle).

A noter que le procédé d'enrôlement peut être répété à intervalles réguliers pour vérifier ou mettre à jour les données de sécurité ou bien les autres données personnelles. Les données récentes et fiables pourront être récupérées depuis une entité gouvernementale. De surcroit, un document d'identité 1 n'a qu'une durée de vie limitée, et doit régulièrement être renouvelé.

De manière préférée, comme l'on verra plus loin, on peut prévoir de limiter le nombre de fois qu'un o(w) peut être calculé/décodé pour une même source, i.e. étant donnée une donnée de sécurité de référence W, lorsqu'une borne est passée, le système refuse un nouveau calcul impliquant W.

### Vérification de l'authentification d'une donnée de sécurité candidate

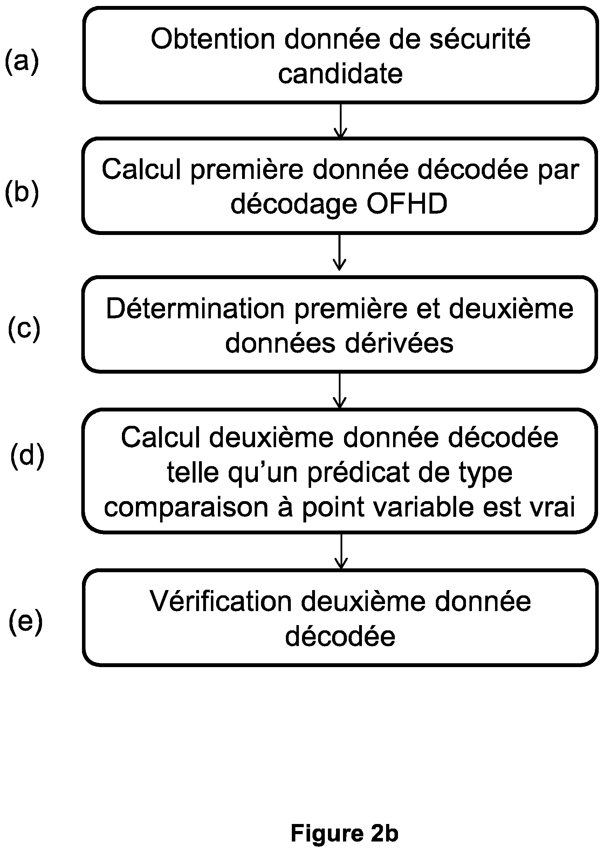

En référence à la figure 2b, on suppose à présent que l'enrôlement a été réalisé avec succès, et que l'on dispose d'une donnée de sécurité candidate à vérifier, notée W' (étape (a) du procédé de vérification de l'authenticité d'une donnée de sécurité). La donnée de sécurité candidate est typiquement une information représentative d'une apparence visible d'un donnée personnelle cible (par exemple un trait biométrique) dans une image.

Dans un mode de réalisation préféré, le procédé de vérification commence dans l'étape (a) par l'obtention d'une façon ou d'une autre (par exemple via les moyens d'acquisition 30 du client 3) d'une image, en particulier une image d'un utilisateur ou une image d'un document d'identité 1, l'image représentant au moins la donnée personnelle cible visible. Par exemple, ladite image peut représenter tout le document d'identité 1 et présenter la photographie de l'individu détenteur du document d'identité 1.

Typiquement, c'est l'individu qui prend en photo son visage ou son document d'identité 1 avec son terminal mobile.

L'étape (a) peut en outre comprendre l'extraction de ladite donnée candidate à partir de l'image (par exemple son DPS, ou bien un modèle biométrique si l'image est celle d'un trait biométrique), soit par le serveur 2 (si le terminal 3 lui a envoyé l'image), soit par le terminal 3 lui-même, et il transmet ensuite directement la donnée de sécurité candidate. On procède le cas échéant exactement de la même façon que dans le procédé d'enrôlement.

On comprend que les données de sécurité de référence et candidate devront être obtenues de manière identique de sorte à pouvoir être comparées.

L'objectif est de vérifier que l'étape (a) s'est bien déroulée comme décrit précédemment, et qu'on n'est pas en présence d'un faux (par exemple une image qui aurait été modifiée frauduleusement). Pour cela, l'individu ou toute autre entité qui souhaite la vérification de la donnée de sécurité candidate le requiert auprès du serveur 2.

Dans une étape (b), les moyens de traitement de données 21 du serveur 2 calculent une première donnée décodée par application d'une procédure de décodage de type obfuscation floue à distance de Hamming à la donnée de sécurité candidate et à une première donnée encodée stockée sur les moyens de stockage de données 22 du serveur 2.

Plus précisément, le serveur 2 accède à la première donnée encodée o associée à la donnée de sécurité de référence (typiquement référencée avec l'empreinte d'un identifiant, cet identifiant pouvant être celui de l'individu ou de son document d'identité), et appliquent ladite procédure de décodage susmentionnée *Decode(o,* W') (utilisation de l'algorithme d'Euclide par exemple). Comme expliqué, on obtient en sortie une première donnée décodée W" qui correspond à la donnée de sécurité de référence W si la donnée de sécurité de référence W et la donnée de sécurité candidate W' sont suffisamment proches au sens de la distance de Hamming.

De façon générale, le résultat d'une comparaison de la donnée de sécurité candidate et de la donnée de sécurité de référence doit montrer qu'elles sont identiques, ou du moins présenter une distance inférieure à un seuil d'erreur prédéterminé. Par exemple, pour des éléments visuels, on considère communément que des données de sécurité de type Digital Photo Seal coïncident si elles diffèrent de moins de 17%. Ainsi, on prend par exemple une distance de Hamming maximale de 91 pour l'acceptance.

A ce stade, on pourrait comparer W" et W, mais ce faisant on fournirait de l'information supplémentaire sur W.

Ainsi, dans une étape (c), on détermine à partir de la première donnée décodée une pluralité de données dérivées de la première donnée décodée, exactement de la même façon que la pluralité de données dérivées de la donnée de sécurité de référence lors de l'enrôlement (division en k parties, hachage, etc.). On comprend ainsi que si W=W", alors W1=W1", W2=W2", etc.

Enfin, dans une étape (d), le serveur 2 accède à la deuxième donnée encodée a associée à la donnée de sécurité de référence et on calcule une deuxième donnée décodée, c'est à dire un payload de la deuxième donnée encodée a, notée b", correspondant à une première donnée d'aléa (i.e. b"=b si W=W"), telle qu'un prédicat de type comparaison à point variable paramétré par la deuxième donnée encodée et la deuxième donnée décodée est vrai lorsque ledit point variable a pour coordonnées lesdites données dérivées W1", W2",...Wk" (comme expliqué lesdits paramètres du prédicat définissent avantageusement une droite et le prédicat de type comparaison à point variable est vrai si et seulement si ledit point variable se trouve sur cette droite, i.e. le point variable ayant pour coordonnées lesdites données dérivées W1", W2",...Wk" se trouve sur la droite définie par la deuxième donnée encodée a et la deuxième donnée décodée b"). Sachant que les données dérivées W1", W2", Wk" et la deuxième donnée encodée a sont définies, la seule variable reste la deuxième donnée décodée b".

Le prédicat est comme expliqué préférentiellement « a₁W1"+a₂W2"...+b"=Wk" », qui est vrai si et seulement si b"=Wk"-a₁W1"-a₂W2"...-aₖ₋₁Wk-1". En d'autres termes, l'étape (f) voit de manière préférée le calcul de b" comme W2"-aW1" si k=2.

A ce stade, on peut directement vérifier b" dans une étape (e) (i.e. vérifier que la deuxième donnée décodée est bien égale à la première donnée d'aléa) pour vérifier la donnée de sécurité candidate.

De manière particulièrement préférée, l'étape (e) de vérification de la deuxième donnée décodée comprend plus précisément la vérification qu'une empreinte cryptographique d'une concaténation d'une deuxième donnée d'aléa calculée et d'une troisième donnée d'aléa stockée sur les moyens de stockage de données 22 du serveur 2 coïncide avec une empreinte cryptographique attendue stockée sur les moyens de stockage de données 22 du serveur 2.

En effet, le serveur stocke h et t, et si on a la bonne valeur de r (la deuxième donnée d'aléa) on a h=H(r|t).

Pour cela la deuxième donnée d'aléa peut être recalculée à partir de la deuxième donnée décodée et d'une somme des première et deuxième données d'aléa stockée sur les moyens de stockage de données 22 du serveur 2 (i.e. la différence entre ladite somme et la deuxième donnée décodée).

En effet u = r+b, et on calcule u-b" qui devrait être égal à r si b=b". En résumé on vérifie que h=H(u-b"|t). Alternativement, comme expliqué on pourrait directement comparer H(b|t) et H(b"|t) (les empreintes respectives de la première donnée d'aléa et de la deuxième donnée décodée concaténées avec la troisième donnée d'aléa), par exemple en stockant sur les moyens de stockage de données 22 du serveur 2 l'empreinte cryptographique de la première donnée d'aléa concaténée avec la troisième donnée d'aléa (i.e. H(b|t)).

Si W' est trop loin de W, alors W"≠W, b"≠b, et l'entropie des fonctions de hachage cryptographique fait qu'on arrivera à un résultat très différent.

Si l'image fournie a été altérée (par exemple en remplaçant la photographie sur un document d'identité), alors les données de sécurité candidates et de référence correspondantes ne coïncideront pas, on obtiendra donc une fausse valeur de l'aléa et donc de l'empreinte, et l'authenticité sera rejetée. Une alerte pour utilisation frauduleuse peut être émise.

Si on a retrouvé l'empreinte, c'est que la donnée de sécurité candidate est valide, i.e. non falsifiée. On peut éventuellement en déduire qu'une donnée personnelle cible est authentique et, authentifier un utilisateur ou son document d'identité sur cette base.

Si on stocke sur les moyens de stockage de données 22 du serveur 2 un chiffré d'au moins une autre donnée à protéger telle qu'une donnée alphanumérique personnelle, avec une clé basée sur la première donnée d'aléa (par exemple une empreinte cryptographique d'une concaténation de la première donnée d'aléa et ladite donnée alphanumérique personnelle), on peut déchiffrer cette donnée grâce à la deuxième donnée décodée (puisqu'elle coïncide avec la première donnée d'aléa).

En effet, à ce stade on sait que la deuxième donnée décodée correspond à la première donnée d'aléa et que l'individu a pu reconstituer avec succès l'empreinte. La ou lesdites autres données à protéger, à sa demande, sont alors transférées à l'équipement client 3. On comprend que, pour garantir au maximum la confidentialité, le serveur 2 fournisse en l'état les données chiffrées, et que ce soit au niveau du client 3 que le déchiffrement ait lieu, de sorte à éviter tout transfert en clair de données personnelles.

A noter qu'on pourrait prévoir que l'utilisateur soit autorisé à en profiter pour mettre à jour ces données personnelles : si par exemple son adresse a changé, il modifie les données avant de les rechiffrer, et de retransmettre l'ensemble au serveur 2 pour stockage.

### Serveur

Selon un troisième aspect, est proposé le serveur 2 pour la mise en œuvre des procédés selon le premier ou le deuxième aspect, i.e. un serveur d'enrôlement pour vérifier l'authenticité d'une donnée de sécurité de référence et/ou de vérification de l'authenticité d'une donnée de sécurité candidate.

Le serveur 2 est typiquement connecté à un réseau 20, et comprend des moyens de stockage de données 22 et des moyens de traitement de données 21 configurés pour (dans le cas de l'enrôlement) :
- Obtenir une donnée de sécurité de référence (en particulier par extraction à partir d'une image) ;
- Générer une première donnée encodée par application à la donnée de sécurité de référence d'une procédure d'encodage de type obfuscation floue à distance de Hamming ;
- Déterminer à partir de la donnée de sécurité de référence une pluralité de données dérivées de la donnée de sécurité de référence ;
- Générer une première donnée d'aléa (et possiblement une deuxième et une troisième données d'aléa), et déterminer une deuxième donnée encodée telle qu'un prédicat de type comparaison à point variable paramétré par la deuxième donnée encodée et la première donnée d'aléa est vrai lorsque ledit point variable a pour coordonnées lesdites données dérivées ;
- Stocker sur les moyens de stockage de données 22 au moins lesdites première et deuxième données encodées (et possiblement une empreinte cryptographique d'une concaténation des deuxième et troisième données d'aléa, une somme des première et deuxième données d'aléa, et la troisième donnée d'aléa).

Dans le cas de l'authentification, les moyens de traitement de données 21 sont par ailleurs configurés pour :
- Obtenir une donnée de sécurité candidate (en particulier par extraction à partir d'une image) ;
- Calculer une première donnée décodée par application d'une procédure de décodage de type obfuscation floue à distance de Hamming à la donnée de sécurité candidate et à une première donnée encodée stockée sur les moyens de stockage de données 22 ;
- Déterminer à partir de la première donnée décodée une pluralité de données dérivées de la première donnée décodée ;
- Calculer une deuxième donnée décodée, correspondant à une première donnée d'aléa, telle qu'un prédicat de type comparaison à point variable paramétré par une deuxième donnée encodée stockée sur les moyens de stockage de données 22 et la deuxième donnée décodée est vrai lorsque ledit point variable a pour coordonnées lesdites données dérivées ;
- Vérifier la deuxième donnée décodée, avantageusement en vérifiant qu'une empreinte cryptographique d'une concaténation d'une deuxième donnée d'aléa calculée et d'une troisième donnée d'aléa stockée sur les moyens de stockage de données 22 coïncide avec une empreinte cryptographique attendue stockée sur les moyens de stockage de données 22, la deuxième donnée d'aléa étant calculée à partir de la deuxième donnée décodée et d'une somme des première et deuxième données d'aléa stockée sur les moyens de stockage de données 22.

Le système peut en outre comprendre au moins un équipement client 3 (typiquement connecté au serveur 2 via le réseau 20, directement ou indirectement) comprenant des moyens d'acquisition optique 30 pour l'acquisition de ladite image (en particulier d'un individu ou de son document d'identité 1).

### Produit programme d'ordinateur

Selon un quatrième et un cinquième aspects, l'invention concerne un produit programme d'ordinateur comprenant des instructions de code pour l'exécution (en particulier sur les moyens de traitement de données 21 du serveur 2) d'un procédé selon le premier ou le deuxième aspect de l'invention, ainsi que des moyens de stockage lisibles par un équipement informatique (une mémoire 22 du serveur 2) sur lequel on trouve ce produit programme d'ordinateur.

## Revendications

1. Procédé d'enrôlement de données pour vérifier l'authenticité d'une donnée de sécurité, le procédé étant **caractérisé en ce qu'**il comprend la mise en œuvre par des moyens de traitement de données (21) d'un serveur (2) d'étapes de :
(A) Obtention d'une donnée de sécurité de référence ;
(B) Génération d'une première donnée encodée par application à la donnée de sécurité de référence d'une procédure d'encodage de type obfuscation floue à distance de Hamming ;
(C) Détermination à partir de la donnée de sécurité de référence d'une pluralité de données dérivées de la donnée de sécurité de référence ;
(D) Génération d'une première donnée d'aléa, d'une deuxième donnée d'aléa et d'une troisième donnée d'aléa, et détermination d'une deuxième donnée encodée telle qu'un prédicat de type comparaison à point variable paramétré par la deuxième donnée encodée et la première donnée d'aléa est vrai lorsque ledit point variable a pour coordonnées lesdites données dérivées, lesdits paramètres du prédicat définissant une droite et ledit prédicat de type comparaison à point variable étant vrai si et seulement si ledit point variable se trouve sur cette droite ;
(E) Stockage sur des moyens de stockage de données (22) du serveur (2) d'au moins lesdites première et deuxième données encodées, d'une empreinte cryptographique d'une concaténation de ladite deuxième donnée d'aléa et de ladite troisième donnée d'aléa, d'une somme des première et deuxième données d'aléa, et de ladite troisième donnée d'aléa.

2. Procédé selon la revendication 1, dans lequel la donnée de sécurité de référence présente *n* coordonnées binaires notées *wᵢ,* la procédure d'encodage de type obfuscation à distance de Hamming comprenant le tirage de n + 1 nombres premiers notés *p*₁*, p*₂ ... *pₙ* et *q,* et le calcul d'un produit $\prod {p}_{i}^{{w}_{i}} mod q$*.*

3. Procédé selon l'une des revendications 1 à 2, dans lequel ledit prédicat de type comparaison à point variable est exprimé par la formule ${\sum }_{i = 0}^{k - 1} {a}_{i} {W}_{i} + b = = {W}_{k}$, où *a* = (*a*₁*,* .. *a*_{*k-*1}) est la deuxième donnée encodée, b la première donnée d'aléa, et *W*₁, *W*₂...*Wₖ* ladite pluralité de données dérivées.

4. Procédé selon l'une des revendications 1 à 3, dans lequel la donnée de sécurité de référence est une information représentative d'une apparence attendue d'une donnée personnelle cible.

5. Procédé selon la revendication 4, dans laquelle soit la donnée personnelle cible est un élément visuel et ladite donnée de sécurité est de type Digital Photo Seal ; soit la donnée personnelle cible est un trait biométrique et ladite donnée de sécurité est un modèle biométrique.

6. Procédé selon l'une des revendications 4 et 5, dans lequel la donnée personnelle cible provient d'un document d'identité (1) d'un individu.

7. Procédé de vérification de l'authenticité d'une donnée de sécurité, **caractérisé en ce qu'**il comprend la mise en œuvre par des moyens de traitement de données (21) d'un serveur (2) d'étapes de :
(a) Obtention d'une donnée de sécurité candidate ;
(b) Calcul d'une première donnée décodée par application d'une procédure de décodage de type obfuscation floue à distance de Hamming à la donnée de sécurité candidate et à une première donnée encodée stockée sur des moyens de stockage de données (22) du serveur (2);
(c) Détermination à partir de la première donnée décodée d'une pluralité de données dérivées de la première donnée décodée ;
(d) Calcul d'une deuxième donnée décodée, correspondant à une première donnée d'aléa, telle qu'un prédicat de type comparaison à point variable paramétré par une deuxième donnée encodée stockée sur les moyens de stockage de données (22) du serveur (2) et la deuxième donnée décodée est vrai lorsque ledit point variable a pour coordonnées lesdites données dérivées, lesdits paramètres du prédicat définissant une droite et ledit prédicat de type comparaison à point variable étant vrai si et seulement si ledit point variable se trouve sur cette droite ;
(e) Vérification qu'une empreinte cryptographique d'une concaténation d'une deuxième donnée d'aléa calculée et d'une troisième donnée d'aléa stockée sur les moyens de stockage de données (22) du serveur (2) coïncide avec une empreinte cryptographique attendue stockée sur les moyens de stockage de données (22) du serveur (2), la deuxième donnée d'aléa étant calculée à partir de la deuxième donnée décodée et d'une somme des première et deuxième données d'aléa stockée sur les moyens de stockage de données (22) du serveur (2).

8. Procédé selon la revendication 7, dans lequel la donnée de sécurité candidate est une information représentative d'une apparence visible d'une donnée personnelle cible dans une image, l'étape (a) comprenant l'extraction de ladite donnée candidate à partir de l'image.

9. Procédé selon la revendication 8, dans lequel l'étape (a) comprend l'acquisition préalable de ladite image par des moyens d'acquisition optique (30) d'un équipement client (3) et la transmission au serveur (2).

10. Serveur (2) d'enrôlement de données pour vérifier l'authenticité d'une donnée de sécurité, **caractérisé en ce qu'**il comprend des moyens de stockage de données (22) et des moyens de traitement de données (21) configurés pour :
• Obtenir une donnée de sécurité de référence ;
• Générer une première donnée encodée par application à la donnée de sécurité de référence d'une procédure d'encodage de type obfuscation floue à distance de Hamming ;
• Déterminer à partir de la donnée de sécurité de référence une pluralité de données dérivées de la donnée de sécurité de référence ;
• Générer une première donnée d'aléa, une deuxième donnée d'aléa et une troisième donnée d'aléa, et déterminer une deuxième donnée encodée telle qu'un prédicat de type comparaison à point variable paramétré par la deuxième donnée encodée et la première donnée d'aléa est vrai lorsque ledit point variable a pour coordonnées lesdites données dérivées, lesdits paramètres du prédicat définissant une droite et ledit prédicat de type comparaison à point variable étant vrai si et seulement si ledit point variable se trouve sur cette droite ;
• Stocker sur les moyens de stockage de données (22) au moins lesdites première et deuxième données encodées, une empreinte cryptographique d'une concaténation de ladite deuxième donnée d'aléa et de ladite troisième donnée d'aléa, une somme des première et deuxième données d'aléa, et ladite troisième donnée d'aléa.

11. Serveur de vérification de l'authenticité d'une donnée de sécurité, **caractérisé en ce qu'**il comprend des moyens de stockage de données (22) et des moyens de traitement de données (21) configurés pour :
• Obtenir une donnée de sécurité candidate ;
• Calculer une première donnée décodée par application d'une procédure de décodage de type obfuscation floue à distance de Hamming à la donnée de sécurité candidate et à une première donnée encodée stockée sur les moyens de stockage de données (22) ;
• Déterminer à partir de la première donnée décodée une pluralité de données dérivées de la première donnée décodée ;
• Calculer une deuxième donnée décodée, correspondant à une première donnée d'aléa, telle qu'un prédicat de type comparaison à point variable paramétré par une deuxième donnée encodée stockée sur les moyens de stockage de données (22) et la deuxième donnée décodée est vrai lorsque ledit point variable a pour coordonnées lesdites données dérivées, lesdits paramètres du prédicat définissant une droite et ledit prédicat de type comparaison à point variable étant vrai si et seulement si ledit point variable se trouve sur cette droite ;
• Vérifier qu'une empreinte cryptographique d'une concaténation d'une deuxième donnée d'aléa calculée et d'une troisième donnée d'aléa stockée sur les moyens de stockage de données (22) du serveur (2) coïncide avec une empreinte cryptographique attendue stockée sur les moyens de stockage de données (22) du serveur (2), la deuxième donnée d'aléa étant calculée à partir de la deuxième donnée décodée et d'une somme des première et deuxième données d'aléa stockée sur les moyens de stockage de données (22) du serveur (2).

12. Produit programme d'ordinateur comprenant des instructions de code pour l'exécution d'un procédé selon l'une des revendications 1 à 9 d'enrôlement de données pour vérifier l'authenticité d'une donnée de sécurité ou de vérification de l'authenticité d'une donnée de sécurité, lorsque ledit procédé est exécuté sur un ordinateur.

13. Moyen de stockage lisible par un équipement informatique sur lequel un produit programme d'ordinateur comprend des instructions de code pour l'exécution d'un procédé selon l'une des revendications 1 à 9 d'enrôlement de données pour vérifier l'anthenticité d'une donnée de sécurité ou de vérification de l'anthenticité d'une donnée de sécurité.

## Patentansprüche

1. Verfahren zum Enrollment von Daten zur Überprüfung der Authentizität eines Sicherheitsdatums, wobei das Verfahren **dadurch gekennzeichnet ist, dass** es die Durchführung der folgenden Schritte durch Datenverarbeitungsmittel (21) eines Servers (2) umfasst:
(A) Erhalten eines Referenz-Sicherheitsdatums;
(B) Erzeugen eines ersten kodierten Datums durch Anwenden eines Kodierungsverfahrens vom Typ unscharfe Hamming-Abstands-Obfuskation auf das Referenz-Sicherheitsdatum;
(C) Bestimmen einer Mehrzahl von abgeleiteten Daten, die von dem Referenz-Sicherheitsdatum abgeleitet sind, ausgehend von dem Referenz-Sicherheitsdatum;
(D) Erzeugen eines ersten Zufallsdatums, eines zweiten Zufallsdatums und eines dritten Zufallsdatums, und Bestimmen eines zweiten kodierten Datums derart, dass ein Prädikat vom Typ Vergleich mit variablem Punkt, das durch das zweite kodierte Datum und das erste Zufallsdatum parametrisiert ist, wahr ist, wenn der variable Punkt die abgeleiteten Daten als Koordinaten hat, wobei die Parameter des Prädikats eine Gerade definieren und das Prädikat vom Typ Vergleich mit variablem Punkt genau dann wahr ist, wenn der variable Punkt auf dieser Geraden liegt;
(E) Speichern, auf Datenspeichermitteln (22) des Servers (2), zumindest des ersten und des zweiten kodierten Datums, eines kryptografischen Hash-Werts einer Verkettung des zweiten Zufallsdatums und des dritten Zufallsdatums, einer Summe des ersten und des zweiten Zufallsdatums, und des dritten Zufallsdatums.

2. Verfahren nach Anspruch 1, wobei das Referenz-Sicherheitsdatum n binäre Koordinaten aufweist, die als wᵢ bezeichnet sind, wobei das Kodierungsverfahren vom Typ Hamming-Abstands-Obfuskation das Ziehen von n+1 Primzahlen, die als p₁, p₂...pₙ und q bezeichnet sind, und die Berechnung eines Produkts ∏ pᵢ^{w}ᵢ mod q umfasst.

3. Verfahren nach einem der Ansprüche 1 bis 2, wobei das Prädikat vom Typ Vergleich mit variablem Punkt durch die Formel Σᵢ₌₀^{k-1} aᵢ Wᵢ + b == Wₖ ausgedrückt wird, wobei a=(a₁...aₖ₋₁) das zweite kodierte Datum ist, b das erste Zufallsdatum ist und W₁, W₂...Wₖ die Mehrzahl von abgeleiteten Daten sind.

4. Verfahren nach einem der Ansprüche 1 bis 3, wobei das Referenz-Sicherheitsdatum eine Information ist, die für ein erwartetes Erscheinungsbild eines personenbezogenen Zieldatums repräsentativ ist.

5. Verfahren nach Anspruch 4, wobei entweder das personenbezogene Zieldatum ein visuelles Element ist und das Sicherheitsdatum vom Typ Digital Photo Seal ist; oder das personenbezogene Zieldatum ein biometrisches Merkmal ist und das Sicherheitsdatum ein biometrisches Template ist.

6. Verfahren nach einem der Ansprüche 4 und 5, wobei das personenbezogene Zieldatum aus einem Ausweisdokument (1) einer Person stammt.

7. Verfahren zur Überprüfung der Authentizität eines Sicherheitsdatums, **dadurch gekennzeichnet, dass** es die Durchführung der folgenden Schritte durch Datenverarbeitungsmittel (21) eines Servers (2) umfasst:
(a) Erhalten eines Kandidaten-Sicherheitsdatums;
(b) Berechnen eines ersten dekodierten Datums durch Anwenden eines Dekodierungsverfahrens vom Typ unscharfe Hamming-Abstands-Obfuskation auf das Kandidaten-Sicherheitsdatum und auf ein erstes kodiertes Datum, das auf Datenspeichermitteln (22) des Servers (2) gespeichert ist;
(c) Bestimmen einer Mehrzahl von abgeleiteten Daten, die von dem ersten dekodierten Datum abgeleitet sind, ausgehend von dem ersten dekodierten Datum;
(d) Berechnen eines zweiten dekodierten Datums, das einem ersten Zufallsdatum entspricht, derart, dass ein Prädikat vom Typ Vergleich mit variablem Punkt, das durch ein zweites kodiertes Datum, das auf den Datenspeichermitteln (22) des Servers (2) gespeichert ist, und das zweite dekodierte Datum parametrisiert ist, wahr ist, wenn der variable Punkt die abgeleiteten Daten als Koordinaten hat, wobei die Parameter des Prädikats eine Gerade definieren und das Prädikat vom Typ Vergleich mit variablem Punkt genau dann wahr ist, wenn der variable Punkt auf dieser Geraden liegt;
(e) Überprüfen, dass ein kryptografischer Hash-Wert einer Verkettung eines berechneten zweiten Zufallsdatums und eines dritten Zufallsdatums, das auf den Datenspeichermitteln (22) des Servers (2) gespeichert ist, mit einem erwarteten kryptografischen Hash-Wert übereinstimmt, der auf den Datenspeichermitteln (22) des Servers (2) gespeichert ist, wobei das zweite Zufallsdatum ausgehend von dem zweiten dekodierten Datum und von einer Summe des ersten und des zweiten Zufallsdatums berechnet wird, die auf den Datenspeichermitteln (22) des Servers (2) gespeichert ist.

8. Verfahren nach Anspruch 7, wobei das Kandidaten-Sicherheitsdatum eine Information ist, die für ein sichtbares Erscheinungsbild eines personenbezogenen Zieldatums in einem Bild repräsentativ ist, wobei Schritt (a) das Extrahieren des Kandidatendatums aus dem Bild umfasst.

9. Verfahren nach Anspruch 8, wobei Schritt (a) das vorherige Erfassen des Bilds durch optische Erfassungsmittel (30) einer Client-Einrichtung (3) und die Übertragung an den Server (2) umfasst.

10. Server (2) zum Enrollment von Daten zur Überprüfung der Authentizität eines Sicherheitsdatums, **dadurch gekennzeichnet, dass** er Datenspeichermittel (22) und Datenverarbeitungsmittel (21) umfasst, die konfiguriert sind zum:
• Erhalten eines Referenz-Sicherheitsdatums;
• Erzeugen eines ersten kodierten Datums durch Anwenden eines Kodierungsverfahrens vom Typ unscharfe Hamming-Abstands-Obfuskation auf das Referenz-Sicherheitsdatum;
• Bestimmen einer Mehrzahl von abgeleiteten Daten, die von dem Referenz-Sicherheitsdatum abgeleitet sind, ausgehend von dem Referenz-Sicherheitsdatum;
• Erzeugen eines ersten Zufallsdatums, eines zweiten Zufallsdatums und eines dritten Zufallsdatums, und Bestimmen eines zweiten kodierten Datums derart, dass ein Prädikat vom Typ Vergleich mit variablem Punkt, das durch das zweite kodierte Datum und das erste Zufallsdatum parametrisiert ist, wahr ist, wenn der variable Punkt die abgeleiteten Daten als Koordinaten hat, wobei die Parameter des Prädikats eine Gerade definieren und das Prädikat vom Typ Vergleich mit variablem Punkt genau dann wahr ist, wenn der variable Punkt auf dieser Geraden liegt;
• Speichern, auf den Datenspeichermitteln (22), zumindest des ersten und des zweiten kodierten Datums, eines kryptografischen Hash-Werts einer Verkettung des zweiten Zufallsdatums und des dritten Zufallsdatums, einer Summe des ersten und des zweiten Zufallsdatums, und des dritten Zufallsdatums.

11. Server zur Überprüfung der Authentizität eines Sicherheitsdatums, **dadurch gekennzeichnet, dass** er Datenspeichermittel (22) und Datenverarbeitungsmittel (21) umfasst, die konfiguriert sind zum:
• Erhalten eines Kandidaten-Sicherheitsdatums;
• Berechnen eines ersten dekodierten Datums durch Anwenden eines Dekodierungsverfahrens vom Typ unscharfe Hamming-Abstands-Obfuskation auf das Kandidaten-Sicherheitsdatum und auf ein erstes kodiertes Datum, das auf den Datenspeichermitteln (22) gespeichert ist;
• Bestimmen einer Mehrzahl von abgeleiteten Daten, die von dem ersten dekodierten Datum abgeleitet sind, ausgehend von dem ersten dekodierten Datum;
• Berechnen eines zweiten dekodierten Datums, das einem ersten Zufallsdatum entspricht, derart, dass ein Prädikat vom Typ Vergleich mit variablem Punkt, das durch ein zweites kodiertes Datum, das auf den Datenspeichermitteln (22) gespeichert ist, und das zweite dekodierte Datum parametrisiert ist, wahr ist, wenn der variable Punkt die abgeleiteten Daten als Koordinaten hat, wobei die Parameter des Prädikats eine Gerade definieren und das Prädikat vom Typ Vergleich mit variablem Punkt genau dann wahr ist, wenn der variable Punkt auf dieser Geraden liegt;
• Überprüfen, dass ein kryptografischer Hash-Wert einer Verkettung eines berechneten zweiten Zufallsdatums und eines dritten Zufallsdatums, das auf den Datenspeichermitteln (22) des Servers (2) gespeichert ist, mit einem erwarteten kryptografischen Hash-Wert übereinstimmt, der auf den Datenspeichermitteln (22) des Servers (2) gespeichert ist, wobei das zweite Zufallsdatum ausgehend von dem zweiten dekodierten Datum und von einer Summe des ersten und des zweiten Zufallsdatums berechnet wird, die auf den Datenspeichermitteln (22) des Servers (2) gespeichert ist.

12. Computerprogrammprodukt, umfassend Codeanweisungen zur Ausführung eines Verfahrens nach einem der Ansprüche 1 bis 10 zum Enrollment von Daten zur Überprüfung der Authentizität eines Sicherheitsdatums oder zur Überprüfung der Authentizität eines Sicherheitsdatums, wenn das Verfahren auf einem Computer ausgeführt wird.

13. Speichermittel, das von einer Computereinrichtung lesbar ist und auf dem ein Computerprogrammprodukt Codeanweisungen zur Ausführung eines Verfahrens nach einem der Ansprüche 1 bis 10 zum Enrollment von Daten zur Überprüfung der Authentizität eines Sicherheitsdatums oder zur Überprüfung der Authentizität eines Sicherheitsdatums umfasst.

## Claims

1. A data enrolment method for verifying the authenticity of a security data item, the method being **characterised in that** it comprises the implementation, by data processing means (21) of a server (2), of steps of:
(A) Obtaining a reference security data item;
(B) Generating a first encoded data item by applying, to the reference security data item, an encoding procedure of the fuzzy Hamming distance obfuscation type;
(C) Determining, from the reference security data item, a plurality of derived data items derived from the reference security data item;
(D) Generating a first random data item, a second random data item and a third random data item, and determining a second encoded data item such that a predicate of the variable-point comparison type, parametrised by the second encoded data item and the first random data item, is true when said variable point has said derived data items as coordinates, said parameters of the predicate defining a straight line and said predicate of the variable-point comparison type being true if and only if said variable point lies on this straight line;
(E) Storing, on data storage means (22) of the server (2), at least said first and second encoded data items, a cryptographic hash of a concatenation of said second random data item and said third random data item, a sum of the first and second random data items, and said third random data item.

2. The method according to claim 1, wherein the reference security data item has n binary coordinates denoted wᵢ, the encoding procedure of the Hamming distance obfuscation type comprising the drawing of n+1 prime numbers denoted p₁, p₂...pₙ and q, and the computation of a product ∏ pᵢ^{w}ᵢ mod q.

3. The method according to any one of claims 1 to 2, wherein said predicate of the variable-point comparison type is expressed by the formula Σᵢ₌₀^{k-1} aᵢ Wᵢ + b == Wₖ, where a=(a₁...aₖ₋₁) is the second encoded data item, b is the first random data item, and W₁, W₂...Wₖ is said plurality of derived data items.

4. The method according to any one of claims 1 to 3, wherein the reference security data item is information representative of an expected appearance of a target personal data item.

5. The method according to claim 4, wherein either the target personal data item is a visual element and said security data item is of the Digital Photo Seal type; or the target personal data item is a biometric trait and said security data item is a biometric template.

6. The method according to any one of claims 4 and 5, wherein the target personal data item originates from an identity document (1) of an individual.

7. A method for verifying the authenticity of a security data item, **characterised in that** it comprises the implementation, by data processing means (21) of a server (2), of steps of:
(a) Obtaining a candidate security data item;
(b) Computing a first decoded data item by applying a decoding procedure of the fuzzy Hamming distance obfuscation type to the candidate security data item and to a first encoded data item stored on data storage means (22) of the server (2);
(c) Determining, from the first decoded data item, a plurality of derived data items derived from the first decoded data item;
(d) Computing a second decoded data item, corresponding to a first random data item, such that a predicate of the variable-point comparison type, parametrised by a second encoded data item stored on the data storage means (22) of the server (2) and the second decoded data item, is true when said variable point has said derived data items as coordinates, said parameters of the predicate defining a straight line and said predicate of the variable-point comparison type being true if and only if said variable point lies on this straight line;
(e) Verifying that a cryptographic hash of a concatenation of a computed second random data item and of a third random data item stored on the data storage means (22) of the server (2) coincides with an expected cryptographic hash stored on the data storage means (22) of the server (2), the second random data item being computed from the second decoded data item and from a sum of the first and second random data items stored on the data storage means (22) of the server (2).

8. The method according to claim 7, wherein the candidate security data item is information representative of a visible appearance of a target personal data item in an image, step (a) comprising extracting said candidate data item from the image.

9. The method according to claim 8, wherein step (a) comprises the prior acquisition of said image by optical acquisition means (30) of client equipment (3) and its transmission to the server (2).

10. A data enrolment server (2) for verifying the authenticity of a security data item, **characterised in that** it comprises data storage means (22) and data processing means (21) configured to:
• Obtain a reference security data item;
• Generate a first encoded data item by applying, to the reference security data item, an encoding procedure of the fuzzy Hamming distance obfuscation type;
• Determine, from the reference security data item, a plurality of derived data items derived from the reference security data item;
• Generate a first random data item, a second random data item and a third random data item, and determine a second encoded data item such that a predicate of the variable-point comparison type, parametrised by the second encoded data item and the first random data item, is true when said variable point has said derived data items as coordinates, said parameters of the predicate defining a straight line and said predicate of the variable-point comparison type being true if and only if said variable point lies on this straight line;
• Store, on the data storage means (22), at least said first and second encoded data items, a cryptographic hash of a concatenation of said second random data item and said third random data item, a sum of the first and second random data items, and said third random data item.

11. A server for verifying the authenticity of a security data item, **characterised in that** it comprises data storage means (22) and data processing means (21) configured to:
• Obtain a candidate security data item;
• Compute a first decoded data item by applying a decoding procedure of the fuzzy Hamming distance obfuscation type to the candidate security data item and to a first encoded data item stored on the data storage means (22);
• Determine, from the first decoded data item, a plurality of derived data items derived from the first decoded data item;
• Compute a second decoded data item, corresponding to a first random data item, such that a predicate of the variable-point comparison type, parametrised by a second encoded data item stored on the data storage means (22) and the second decoded data item, is true when said variable point has said derived data items as coordinates, said parameters of the predicate defining a straight line and said predicate of the variable-point comparison type being true if and only if said variable point lies on this straight line;
• Verify that a cryptographic hash of a concatenation of a computed second random data item and of a third random data item stored on the data storage means (22) of the server (2) coincides with an expected cryptographic hash stored on the data storage means (22) of the server (2), the second random data item being computed from the second decoded data item and from a sum of the first and second random data items stored on the data storage means (22) of the server (2).

12. A computer program product comprising code instructions for executing a method according to any one of claims 1 to 10 for enrolling data in order to verify the authenticity of a security data item or for verifying the authenticity of a security data item, when said method is executed on a computer.

13. A storage means readable by computer equipment, on which a computer program product comprises code instructions for executing a method according to any one of claims 1 to 10 for enrolling data in order to verify the authenticity of a security data item or for verifying the authenticity of a security data item.
